# FASCICULE DE BREVET EUROPEEN

(11) **EP 3 564 126 B1**
(45) Date de publication et mention de la délivrance du brevet: **17.06.2020**
(21) Numéro de dépôt: 19168702.9
(22) Date de dépôt: 11.04.2019
(51) Int. Cl.: B64D 11/06

(54) **MODULE DE SIEGE COMPORTANT UNE PIECE D'ASSISE ESCAMOTABLE**
SITZMODUL, DAS EINEN AUSZIEHBAREN SITZTEIL UMFASST
SEAT MODULE COMPRISING AN EXTENDABLE SEATING PART

(30) Priorité: 03.05.2018 FR 1853830
(43) Date de publication de la demande: 06.11.2019
(73) Titulaire: Airbus Interiors Services, 31700 Blagnac (FR)
(72) Inventeur: FERRERE, Nicolas, 31060 Toulouse Cedex 9 (FR); CHANTAL, Béranger, 31060 Toulouse Cedex 9 (FR); CHAFIQ, Nadra, 31060 Toulouse Cedex 9 (FR)
(74) Mandataire: Gicquel, Olivier Yves Gérard

(56) Documents cités:
- EP-A1- 1 707 486
- EP-A1- 2 733 073
- WO-A1-2008/122761
- GB-A- 2 510 765

## Description

La présente invention concerne un module de siège, en particulier pour un aéronef ainsi qu'un aéronef comportant au moins un tel module de siège.

Dans certains aéronefs, l'aménagement intérieur permet d'assurer un meilleur confort des passagers. En particulier, il est connu de mettre en place des sièges basculants permettant de passer d'une position assise à une position allongée.

On connaît, du brevet EP1707486 un module de siège qui comporte un fauteuil prolongé latéralement par une méridienne afin d'améliorer le confort des passagers en leur offrant un grand espace qui peut si besoin être utilisé comme couchage.

Bien que de tels sièges donnent entière satisfaction, il est souhaitable de trouver des aménagements qui améliorent encore le confort des passagers.

Un objet de la présente invention est de proposer un module de siège qui comporte un fauteuil prolongé latéralement par une méridienne qui présente une pièce d'assise escamotable pour permettre, lorsqu'elle est retirée, un gain de place et un accès facilité à un caisson de bagage situé sous la méridienne.

A cet effet, est proposé un module de siège tel que revendiqué dans la revendication 1.

Un tel module de siège permet ainsi lorsque la pièce d'assise est retirée d'avoir accès au caisson de bagage et de disposer d'un espace plus important devant le fauteuil, et lorsque la pièce est mise en place d'avoir une surface de couchage plus importante.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
la Fig. 1 est une vue de côté d'un aéronef selon l'invention,
la Fig. 2 est une vue en perspective d'un module de siège en position assise,
la Fig. 3 est une vue en perspective du module de siège dans une position allongée, et
la Fig. 4 est une vue de dessus du module de siège en position allongée.

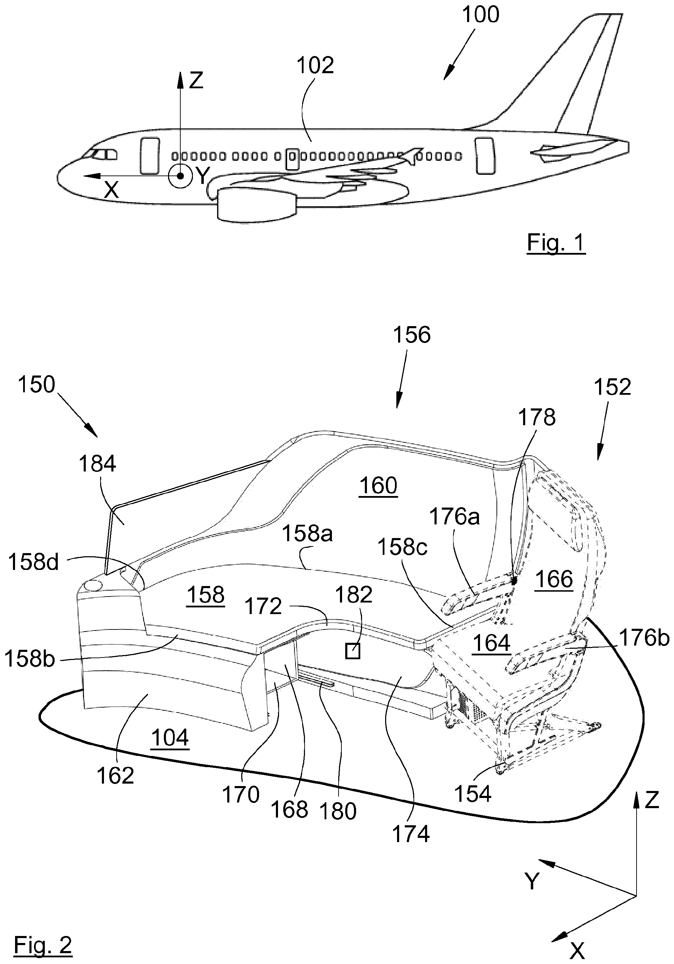

La Fig. 1 montre un aéronef 100 qui comporte une cabine 102.

Dans la description qui suit, et par convention, on appelle X l'axe longitudinal de l'aéronef 100 orienté positivement dans le sens d'avancement de l'aéronef 100, on appelle Y l'axe transversal de l'aéronef qui est horizontal lorsque l'aéronef est au sol, et Z l'axe vertical lorsque l'aéronef est au sol, ces trois directions X, Y et Z étant orthogonales entre elles.

A l'intérieur de la cabine 102 est installé un plancher 104 (Fig. 2) sur lequel est fixé au moins un module de siège 150 selon l'invention.

Les Figs. 2 à 4 montrent l'intérieur de la cabine 102 avec le plancher 104 et un module de siège 150 dans différentes positions d'utilisation.

Le module de siège 150 comporte un fauteuil 152 fixé au plancher 104, ici par l'intermédiaire de pieds 154 et une méridienne 156 qui est également fixée au plancher 104 par des pieds 162.

Le fauteuil 152 présente un siège 164 et un dossier 166 disposé à l'arrière du siège 164. L'avant du fauteuil 152 correspond à l'avant du siège 164 et l'arrière du fauteuil 152 correspond à l'arrière du siège 164. Dans le cas de l'aéronef 100, l'avant du siège 164 est orienté vers l'avant de l'aéronef 100 et l'arrière du siège 164 est orienté vers l'arrière de l'aéronef 100.

La méridienne 156 comporte un matelas 158 et un dossier 160.

Le matelas 158 prolonge latéralement le siège 164.

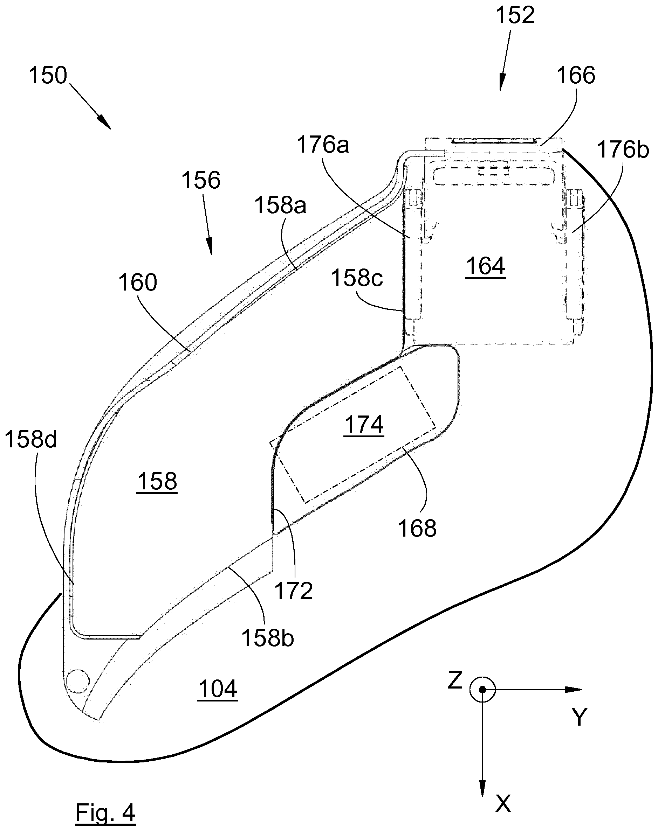

Comme cela est mieux vu sur la Fig. 4, le matelas 158 peut s'étendre depuis le siège 164 vers le côté et vers l'avant. Mais une orientation différente est possible et il est possible par exemple que le matelas s'étende uniquement sur le côté sans présenter une déviation vers l'avant.

Le matelas 158 présente un bord arrière 158a disposé à l'arrière du matelas 158 par rapport à l'axe longitudinal X et un bord avant 158b disposé à l'avant du matelas 158 par rapport à l'axe longitudinal X.

Le matelas 158 présente également un bord proximal 158c en contact avec un bord latéral du siège 164 et un bord distal 158d éloigné du siège 164.

Le bord arrière 158a et le bord avant 158b constituent les longueurs du matelas 158, tandis que le bord proximal 158c et le bord distal 158d constituent les largeurs du matelas 158.

Le dossier 160 de la méridienne 156 prolonge le dossier 166 du fauteuil 152 et il s'étend le long du bord arrière 158a et du bord distal 158d formant ainsi une paroi de séparation qui permet d'isoler le passager.

La méridienne 156 comporte également sous le matelas 158, un caisson 168 (vu en pointillés sur la Fig. 4) qui est creux et présente une ouverture 170 disposée dans un plan perpendiculaire au plancher 104. Ce caisson 168 permet par exemple de ranger des bagages. L'ouverture 170 est orientée vers le fauteuil 152 de manière à permettre au passager assis d'atteindre le contenu du caisson 168.

Afin de faciliter l'accès à l'ouverture 170, le matelas 158 présente une découpe 172 qui s'étend au-dessus de l'ouverture 170 le long du bord avant 158b. la découpe 172 se situe entre le bord avant 158b et le bord proximal 158c.

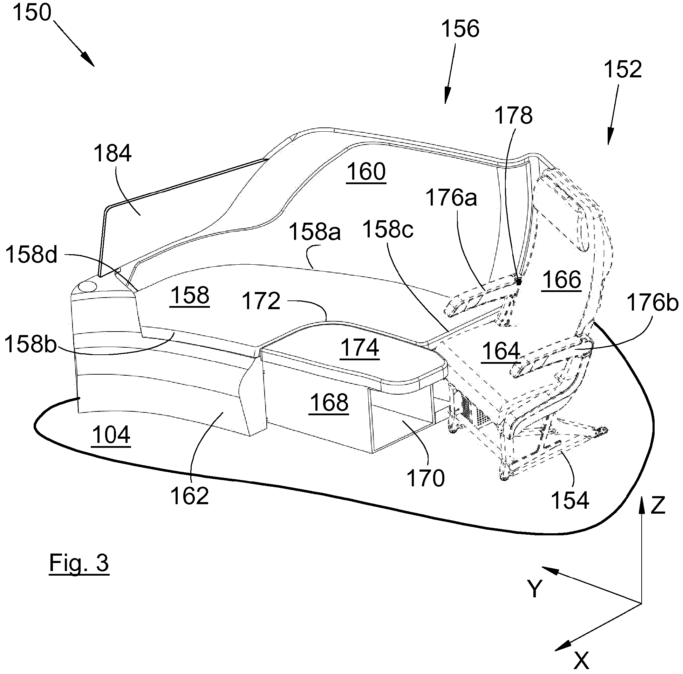

Le caisson 168 est mobile en translation selon une direction globalement perpendiculaire au plan de l'ouverture 170. Le caisson 168 est ainsi mobile entre une position reculée (Fig. 2) et une position avancée (Figs. 3 et 4). En position reculée, le caisson 168 est éloigné du fauteuil 152 permettant ainsi de libérer l'espace proche du fauteuil 152 et l'espace sous la découpe 172. En position avancée, le caisson 168 est rapproché du fauteuil 152 permettant ainsi au passager d'avoir un accès facilité à l'ouverture et d'obturer verticalement l'espace sous la découpe 172.

En position reculée, le caisson 168 est hors de l'espace sous la découpe 172 et en position avancée, le caisson 168 comble l'espace sous la découpe 172.

Le module de siège 150 présente également une pièce d'assise 174 qui prend globalement la forme de la découpe 172 et qui se positionne sur le caisson 168 lorsque celui-ci est en position avancée de manière à combler la découpe 172 et étendre la surface du matelas 158.

Ainsi lorsque la pièce d'assise 174 est en place, la surface de couchage est agrandie et lorsqu'elle est retirée, l'espace au voisinage du siège 164 est agrandi et l'accès à l'ouverture 170 est amélioré.

Dans le mode de réalisation de l'invention présenté sur les Figs. 2 à 4, le fauteuil 152 présente un accoudoir 176a-b de part et d'autre du siège 164. Il y a ainsi un premier accoudoir 176a entre le siège 164 et le matelas 158, c'est-à-dire au-dessus du bord proximal 158c et un deuxième accoudoir 176b de l'autre côté du siège 164. Pour permettre au passager de profiter d'une surface de couchage plus importante, le premier accoudoir 176a est escamotable. Selon un mode de réalisation particulier, le premier accoudoir 176a est monté mobile en rotation sur une charnière 178 disposée au niveau de l'extrémité du premier accoudoir 176a qui est au fond du siège 164, c'est-à-dire proche du dossier 166 du fauteuil 152. Le passager peut ainsi relever le premier accoudoir 176a.

Le deuxième 176b peut également être escamotable pour faciliter le passage du passager.

Pour aider au déplacement du caisson 168, celui-ci peut être monté sur roulettes ou sur des rails 180.

Pour assurer le maintien de la pièce d'assise 174 sur le caisson 168, des moyens de fixation 182 sont prévus entre le caisson 168 et la pièce d'assise 174. Les moyens de fixation 182 sont par exemple deux bandes Velcro® dont une première est fixée sur le caisson 168 et dont une deuxième 182 est fixée sous la pièce d'assise 174 pour coopérer avec la première lorsque la pièce d'assise 174 est positionnée sur le caisson 168.

Lorsqu'un premier module de siège 150 est disposé devant un deuxième module de siège 150, le dossier 160 de la méridienne 156 du premier module de siège 150 vient contre le bord avant 158b du deuxième module de siège 150 pour délimiter la surface de couchage du deuxième module de siège 150.

Pour créer un espace privatif pour le passager, une paroi de séparation 184 peut être fixée de manière escamotable le long du bord distal 158d afin de prolonger le dossier 160.

## Revendications

1. Module de siège (150) pour un aéronef comportant:
- un fauteuil (152) présentant un siège (164) et un dossier (166) disposé à l'arrière du siège (164),
- une méridienne (156) présentant un matelas (158) et un dossier (160), où le matelas (158) prolonge latéralement le siège (164) et présente un bord arrière (158a) disposé à l'arrière du matelas (158), un bord avant (158b) disposé à l'avant du matelas (158), un bord proximal (158c) en contact avec un bord latéral du siège (164) et un bord distal (158d) éloigné du siège (164), où le dossier (160) de la méridienne (156) prolonge le dossier (166) du fauteuil (152) et s'étend le long du bord arrière (158a) et du bord distal (158d), et où le matelas (158) présente une découpe (172), **caractérisé en ce que**
- un caisson (168) logé sous le matelas (158) et présentant une ouverture (170), où le caisson (168) est mobile en translation entre une position reculée dans laquelle le caisson (168) est éloigné du fauteuil (152) et libère l'espace sous la découpe (172) et une position avancée dans laquelle le caisson (168) est rapproché du fauteuil (152) et obture verticalement l'espace sous la découpe (172), et
- une pièce d'assise (174) prenant globalement la forme de la découpe (172) et qui se positionne sur le caisson (168) lorsque celui-ci est en position avancée de manière à combler la découpe (172).

2. Module de siège (150) selon la revendication 1, **caractérisé en ce que** le fauteuil (152) présente un premier accoudoir (176a) entre le siège (164) et le matelas (158) et **en ce que** le premier accoudoir (176a) est escamotable.

3. Module de siège (150) selon l'une des revendications 1 ou 2, **caractérisé en ce qu'**il comporte des moyens de fixation (182) prévus entre le caisson (168) et la pièce d'assise (174).

4. Aéronef (100) comportant un plancher (104) et au moins un module de siège (150) selon l'une des revendications 1 à 3 où le fauteuil (152) et la méridienne (156) sont fixés au plancher (104).

5. Aéronef (100) selon la revendication 4, **caractérisé en ce que** pour un premier module de siège (150) disposé devant un deuxième module de siège (150), le dossier (160) de la méridienne (156) du premier module de siège (150) vient contre le bord avant (158b) du deuxième module de siège (150).

## Patentansprüche

1. Sitzmodul (150) für ein Flugzeug, umfassend:
- einen Sessel (152), welcher eine Sitzfläche (164) und eine Rückenlehne (166) aufweist, welche an der Rückseite der Sitzfläche (164) angeordnet ist,
- eine Chaiselongue (156), welche eine Matratze (158) und eine Rückenlehne (160) aufweist, wobei die Matratze (158) die Sitzfläche (164) seitlich verlängert und einen hinteren Rand (158a), welcher an der Rückseite der Matratze (158) angeordnet ist, einen vorderen Rand (158b), welcher an der Vorderseite der Matratze (158) angeordnet ist, einen nahe gelegenen Rand (158c) in Kontakt mit einem seitlichen Rand der Sitzfläche (164) und einen abgelegenen Rand (158d) aufweist, welcher von der Sitzfläche (164) entfernt ist, wobei die Rückenlehne (160) der Chaiselongue (156) die Rückenlehne (166) des Sessels (152) verlängert und sich entlang des hinteren Randes (158a) und des abgelegenen Randes (158d) erstreckt, und wobei die Matratze (158) eine Aussparung (172) aufweist, **gekennzeichnet durch**
- ein Kasten (168), der unter der Matratze (158) untergebracht ist und eine Öffnung (170) aufweist, wobei der Kasten (168) in Translation bewegbar ist zwischen einer zurückgeschobenen Position, in welcher der Kasten (168) von dem Sessel (152) entfernt ist und den Raum unter der Aussparung (172) frei gibt, und einer vorgeschobenen Position, in welcher der Kasten (168) an den Sessel (152) herangerückt ist und den Raum unter der Aussparung (172) vertikal verschließt, und
- ein Sitzteil (174), welches im Allgemeinen die Form der Aussparung (172) annimmt und welches auf dem Kasten (168) positioniert ist, wenn sich dieser in der vorgeschobenen Position befindet, um die Aussparung (172) auszufüllen.

2. Sitzmodul (150) nach Anspruch 1, **dadurch gekennzeichnet, dass** der Sessel (152) eine erste Armlehne (176a) zwischen der Sitzfläche (164) und der Matratze (158) aufweist und dass die erste Armlehne (176a) einklappbar ist.

3. Sitzmodul (150) nach einem der Ansprüche 1 oder 2, **dadurch gekennzeichnet, dass** es Befestigungsmittel (182) umfasst, welche zwischen dem Kasten (168) und dem Sitzteil (174) vorgesehen sind.

4. Flugzeug (100), umfassend einen Boden (104) und mindestens ein Sitzmodul (150) nach einem der Ansprüche 1 bis 3, bei welchem der Sessel (152) und die Chaiselongue (156) an dem Boden (104) befestigt sind.

5. Flugzeug (100) nach Anspruch 4, **dadurch gekennzeichnet, dass** für ein erstes Sitzmodul (150), welches vor einem zweiten Sitzmodul (150) angeordnet ist, die Rückenlehne (160) der Chaiselongue (156) des ersten Sitzmoduls (150) an den vorderen Rand (158b) des zweiten Sitzmoduls (150) anstößt.

## Claims

1. Seat module (150) for an aircraft comprising:
- an armchair (152) having a seat (164) and a backrest (166) disposed behind the seat (164),
- a méridienne (156) having a mattress (158) and a backrest (160), in which the mattress (158) laterally extends the seat (164) and has a rear edge (158a) disposed at the rear of the mattress (158), a front edge (158b) disposed at the front of the mattress (158), a proximal edge (158c) in contact with a lateral edge of the seat (164) and a distal edge (158d) away from the seat (164), in which the backrest (160) of the méridienne (156) extends the backrest (166) of the armchair (152) and extends along the rear edge (158a) and the distal edge (158d), and in which the mattress (158) has a cutout (172), **characterized by**
- a box (168) housed under the mattress (158) and having an opening (170), in which the box (168) is translationally mobile between a retracted position in which the box (168) is away from the armchair (152) and frees the space under the cutout (172) and an advanced position in which the box (168) is close to the armchair (152) and vertically blocks the space under the cutout (172), and
- a seating part (174) taking the overall form of the cutout (172) and which is positioned on the box (168) when the latter is in advanced position so as to fill the cutout (172).

2. Seat module (150) according to Claim 1, **characterized in that** the armchair (152) has a first armrest (176a) between the seat (164) and the mattress (158) and **in that** the first armrest (176a) is retractable.

3. Seat module (150) according to one of Claims 1 and 2, **characterized in that** it comprises fixing means (182) provided between the box (168) and the seating part (174).

4. Aircraft (100) comprising a floor (104) and at least one seat module (150) according to one of Claims 1 to 3, in which the armchair (152) and the méridienne (156) are fixed to the floor (104).

5. Aircraft (100) according to Claim 4, **characterized in that**, for a first seat module (150) disposed in front of a second seat module (150), the backrest (160) of the méridienne (156) of the first seat module (150) comes against the front edge (158b) of the second seat module (150).
